# EUROPÄISCHE PATENTSCHRIFT

(11) **EP 1 160 292 B1**
(45) Veröffentlichungstag und Bekanntmachung des Hinweises auf die Patenterteilung: **11.10.2006**
(21) Anmeldenummer: 01113047.3
(22) Anmeldetag: 29.05.2001
(51) Int. Cl.: C09B 63/00, C05G 3/00, C09B 67/22

(54) **Einfärbung von mineralischen Düngemitteln**
Colouration of inorganic fertilisers
Coloration d'engrais minéraux

(30) Priorität: 03.06.2000 DE 10027671
(43) Veröffentlichungstag der Anmeldung: 05.12.2001
(73) Patentinhaber: K+S Aktiengesellschaft, 34111 Kassel (DE)
(72) Erfinder: Kaack, Hermann, Dr., 47800 Krefeld (DE); Hasenburg, Ulrich, 47829 Krefeld (DE); Staat, Volker, 47799 Krefeld (DE); Krüsemann Agnes Juliane Frau, 67069 Ludwigshafen (DE)

(56) Entgegenhaltungen:
- EP-A- 0 049 777
- EP-A- 0 751 190
- EP-A- 0 813 117
- WO-A-97/19030
- DD-A- 273 941
- PATENT ABSTRACTS OF JAPAN vol. 015, no. 181 (C-0830), 9. Mai 1991 (1991-05-09) & JP 03 043462 A (DAINIPPON INK & CHEM INC), 25. Februar 1991 (1991-02-25)
- DATABASE WPI Section Ch, Week 199313 Derwent Publications Ltd., London, GB; Class A97, AN 1993-104485 XP002252116 & JP 05 043829 A (DAINIPPON INK & CHEM KK) , 23. Februar 1993 (1993-02-23)
- DATABASE WPI Section Ch, Week 198327 Derwent Publications Ltd., London, GB; Class C04, AN 1983-702260 XP002252117 & JP 58 088194 A (DAINICHISEIKA COLOR & CHEM MFG), 26. Mai 1983 (1983-05-26)

## Beschreibung

Die vorliegende Erfindung betrifft die Einfärbung von mineralischen Düngemitteln mit verlackten Azopigmenten.

Aus EP 00049777 ist bekannt, dass neben basischen auch saure Farbstoffe und Pigmente u.a. für die Düngereinfärbung eingesetzt werden können.

Die genannten basischen Farbstoffe wie z.B. Basic Violet 3 oder 10 haben auf mineralischen, nitrathaltigen Mehrnährstoffdüngern eine schlechte Lichtechtheit, so dass die Farbstoffe in einer höheren Menge dosiert werden müssen, um eine Farbreserve zu haben. Weiterhin sind diese Farbstoffe von toxikologischer Seite verbesserungsbedürftig und sollten daher bei der Düngemitteleinfärbung vermieden werden. So dürfen gemäß § 12 der Österreichischen Düngemittelverordnung, BGBI Nr. 1007/1994 Austria, zur Einfärbung von Düngemitteln nur lebensmittelrechtlich zugelassene Farbmittel eingesetzt werden.

Saure Farbstoffe wie z.B. Acid Red 88 oder auch Metallkomplexfarbstoffe wie z.B. Acid Violet 90 weisen aufgrund ihrer Wasserlöslichkeit den Nachteil der Migration in das Düngerkorn auf.

Aus diesen Gründen verschwindet mit basischen oder sauren Farbstoffen - bei der überwiegend angewendeten Oberflächenfärbung - der anfangs erzielte Farbeindruck bei eingefärbten mineralischen Düngemitteln sehr schnell.

Verwendet man eine Kombination aus einem basischen oder sauren Rot- oder Rubinfarbstoff mit einem Blaupigment wie z.B. Pigment Blue 15:1, so ändert sich der anfangs erzielte violette Farbton sehr schnell nach Blau, da der Rotfarbstoff in das Düngerkorn hinein migriert und das Blaupigment an der Oberfläche verbleibt.

Die ebenfalls in dem EP 00049777 genannten Rotpigmente, z.B. Pigment Red 101 oder Pigment Red 179, sind für die Düngereinfärbung nicht geeignet, da mit ihnen, besonders in Mischung mit Pigment Blue 15 oder 16, nicht die gewünschten brillanten Violettfärbungen erzielt werden können.

Somit sind diese Farbstoffe beziehungsweise Farbstoffmischungen für die Düngereinfärbung ungeeignet.

Der vorliegenden Erfindung lag daher die Aufgabe zugrunde, den zuvor genannten Nachteilen abzuhelfen und Farbmittel zu finden, die nicht in das Düngerkorn hinein migrieren und farbtonstabile, brillante Färbungen im Rot- bis Violettbereich ergeben.

Es wurde nun gefunden, dass verlackte Azopigmente auf Basis von Anilin- und/oder Naphthylamin-sulfonsäuren und BON-Säure sowie einem Verlackungs-metall, ausgewählt aus der Gruppe IIA, IIB, IIIB, VIIA des Periodensystems der Elemente vom Typ Pigment Red 48, 52, 57, 58, 63 und 200 oder in Mischung mit Pigment Blue 15 oder 16 geeignet sind, die gewünschte farbstabile, brillante Düngemitteleinfärbung zu erreichen.

Unter Pigment Blue 15 versteht man diejenigen Pigmente mit dem Generic Name: Pigment Blue 15:1 oder 15:2 oder 15:3 oder 15:4 oder 15:6. Es können im Prinzip alle bekannten mineralischen Düngemittel mit den erfindungsgemäßen Azopigmenten eingefärbt werden. Insbesondere eignen sich nitrathaltige Mehmährstoffdüngemittel wie NPK-Dünger mit 5 - 30 % N (als NH₄ und NO₃), 5 - 25 % P₂O₅, 5 - 35 % K₂O (aus KCI oder/und K₂SO₄), 0 - 10 % S und 0 - 6 % MgO sowie ggf. Spurenelemente wie z.B. B, Zn, Mn und/oder Mo, wobei als Ballast in der Regel Ca-Salze enthalten sind. Bevorzugt sind es NPK-Dünger mit 10 - 20 % N, 5 - 15 % P₂O₅, 8 - 20 % K₂O, 4 - 10 % S und 0 - 4 % MgO und Spuren, insbesondere mit 12 - 20 % N, 5- 12 % P₂O₅, 10 - 20 % K₂O, 5 - 8 % S und 1 - 3 % MgO und Spuren, zum Beispiel Nitrophoska® 12 + 10 + 20S + 2, Nitrophoska® 12 + 12 + 17S + 2, Nitrophoska® 15 + 5 + 20S + 2 und Nitrophoska® 20 + 5 + 10S + 3.

Die mineralischen Mehrnährstoff-Düngemittel und die nitrathaltigen Düngemittel lassen sich in an sich bekannter Weise aus Rohstoffen wie z.B. Rohphosphat, Phosphor-, Salpeter-, Schwefelsäure, Kali- und Magnesiumsalze, Ammoniak und verschiedenen anderen Zusätzen durch Granulation der erzeugten Maische herstellen. Im Anschluss daran wird in der Regel das getrocknete Granulat einer Behandlung unterzogen, welche das Verklumpen des Düngers bei Lagerung und Transport vermeidet.

Die Einfärbung des Düngers mit den erfindungsgemäßen Pigmenten kann im Nassteil vor der Granulation bzw. vor der Trocknung erfolgen oder durch nachträgliches Aufbringen auf das fertige Düngergranulat. Für beide Arten der Einfärbung eignen sich sowohl feste wie auch flüssige Pigmentdispersionen.

Die Pigmentdispersionen lassen sich in an sich bekannter Weise, wie industrieüblich durchgeführt, z.B. durch Feinvermahlung der Pigmente in der Nassphase unter Zusatz von Dispergiermitteln und gegebenenfalls von Stabilisierungsmitteln herstellen. Als Dispergiermittel eignen sich sowohl anionische, kationische wie auch besonders nichtionische Verbindungen mit Netz- und Dispergierwirkung, wie z.B. Formaldehyd-Polykondensate mit Naphthalinsulfonsäuren, quartäre Ammoniumsalze langkettiger Fettalkylamine oder Polyethylenglykole sowie andere Ethoxylierungsprodukte, bevorzugt nichtionische Dispergiermittel, besonders bevorzugt Polyethylenglykole, Polypropylenglykole und Polyetherole mit verschiedenen Anteilen von Ethylen- und Propylenoxid und Ethoxylierungsprodukte von Fettalkoholen.

Als Stabilisierungsmittel eignen sich neutrale Lösemittel wie Alkanole, Glykole, Glykolester, Amide, alkylierte Amide sowie Ester, bevorzugt Propylenglykol, Dipropylenglykol, Butyldiglykol, Methoxipropanol und NMP, insbesondere bevorzugt Dipropylenglykol, Butyldiglykol und Methoxipropanol-2. Die Pigmentdispersion kann weiterhin durch Zusätze, wie z.B. dispergiertem Acrylatharz oder Carboxymethylcellulose stabilisiert werden.

Die Pigmente setzen sich aus Azokomponente, Kuppler und Verlackungsmetall zusammen. Als Azokomponente eignen sich Anilin-2-sulfonsäure, 4-Toluidin-3-sulfonsäure (4B-Säure), 4-Chloranilin-2-sulfonsäure, 4-Chloranilin-3-sulfonsäure, 4-Nitranilin-2-sulfonsäure, 4-Anisidin-3-sulfonsäure, 4-Phenetidin-3-sulfonsäure, 3-Ethyl-4-chloranilin-6-sulfonsäure, 2-Chlor-4-toluidin-5-sulfonsäure (2B-Säure), 6-Chlor-3-toluidin-4-sulfonsäure (C-Amin) und 2-Naphthylamin-1-sulfonsäure (Tobias-Säure), bevorzugt 4B-Säure, 2B-Säure und C-Amin, besonders bevorzugt 2B-Säure und 4B-Säure. Als Kuppler dient ausschließlich die BON-Säure (Beta-Oxinaphthoesäure, 2-Hydroxy-3-naphthoesäure). Als Verlackungsmetalle eignen sich Metalle der Gruppe IIA, IIB, IIIB, VIIA des Periodensystems der Elemente, bevorzugt Metalle der Gruppe IIA, IIIB und VIIA des Periodensystems der Elemente, besonders bevorzugt Calcium, Strontium, Barium, Aluminium und Mangan, insbesondere Calcium.

Nach erfolgter Dispergierung liegen die Pigmentdispersionen in flüssiger Form vor und können ggf. durch Trocknung, wie z.B. durch Sprühtrocknung, in feste, pulvrige Pigmentdispersionen übergeführt werden.

Die gemäß dieser Erfindung zur Einfärbung von nitrathaltigen Mehrnährstoffdüngern geeigneten Pigmentdispersionen betreffen mit Pigment Red 57 ein Pigment, welches gemäß EG-Richtlinie 94/45/EG zur Einfärbung von Lebensmitteln zugelassen ist und mit Pigment Red 48 ein Farbmittel, welches ebenso wie Pigment Red 57 zur Kolorierung von kosmetischen Produkten in Österreich gemäß Kosmetik-Farbstoffverordnung (Nr. 416, BGBI für die Republik Österreich vom 30.06.1995) zugelassen sind.

Die Pigmente können als feste oder flüssige Dispersion direkt zur Masseeinfärbung der Düngermaische vor der Granulation zugegeben oder in wässriger Lösung auf das Düngemittelkom aufgebracht und durch Verdampfen des Wassers auf dem Granulat fixiert werden. Es resultiert ein durchgefärbter oder oberflächengefärbter Dünger.

Mit den Calcium-Verlackungsprodukten des Azofarbstoffs aus 4B-Säure und BON-Säure (Pigment Red 57:1) werden in Mischung mit Pigment Blue 15 und 16 besonders stabile und brillante violette Färbungen auf Düngemitteln erzielt. Solche Pigmentmischungen können auch mit geeigneten Dispergier- und Stabilisierungsmitteln in stabile flüssige oder feste Pigmentpräparationen gebracht werden und ergeben brillante violette Farbtöne auf Düngemitteln.

Die Erfindung wird anhand nachfolgender Beispiele näher erläutert:

### Beispiel 1:

In einem Reaktionskolben werden 15,8 g Rohphosphat (P₂O₅-Gehalt: 33 %) mit 50,9 g 85 %-iger Salpetersäure 1,5 h lang bei 55°C gerührt und dann mit 5,9 g 85 %-iger Schwefelsäure versetzt. Diese Mischung wird mit insgesamt 10,2 g Ammoniakgas auf einen pH-Wert von 5 - 5,5 gebracht; danach werden der Suspension 25,5 g Ammonsulfat, 16,7 g Kaliumchlorid sowie 7,2 g Kieserit zugegeben.

Dieser Maische wird bei 100°C eine Mischung aus 0,03 g Pigment Red 48:1 in 30 %-iger anionischer Pulverdispersion und 0,02 g Pigment Blue 15:1 in 40 %-iger anionischer Pulverdispersion zugesetzt und diese Mischung nach Homogenisieren und Entwicklung der vollen Farbstärke zu einem Düngemittelgranulat getrocknet. Man erhält 98 g eines Mehrnährstoffdüngers der Zusammensetzung: 20 % N, 5 % P₂O₅, 10 % K₂O und 2 % MgO, welcher brillantviolett durchgefärbt ist.

### Beispiel 2:

In einer Laborapparatur wird ein Gemisch aus 6,5 g Rohphosphat (33 % P₂O₅), 39,5 g 60 %-iger Salpetersäure und 5,9 g 75 %-iger Phosphorsäure 1,5 h lang bei 50°C gerührt. Der saure Aufschluss wird stufenweise mit insgesamt 8,2 g gasförmigem Ammoniak auf einen pH-Wert von 5,2 gebracht. Der Mischung werden bei 95 °C 38,5 g Kaliumsulfat, feinkristallin, sowie 0,04 g einer 30 %-iger nichtionischen wässrigen Flüssigdispersion von Pigment Red 57:1 zugesetzt und durch Zusatz von 5 ml Wasser eine gießfähige, homogene Suspension erzeugt. Nach Granulieren der Mischung erhält man 101 g brillantrot durchgefärbtes Düngergranulat der Zusammensetzung: 12 % N, 10 % P₂O₅, 20 % K₂O.

### Beispiel 3:

In einer Labor-Glasapparatur werden 6,5 g Rohphosphat (33 % P₂O₅) mit einer Mischung aus 5,9 g 75 %-iger Phosphorsäure und 38,1 g 85 %-iger Salpetersäure 1,5 h bei 60°C gerührt. Das Gemisch wird danach langsam mit insgesamt 9,5 g Ammoniakgas auf einen pH-Wert von 5,5 eingestellt; die Temperatur steigt zwischenzeitlich auf 120°C und sinkt nach der Zugabe von 38,8 g gemahlenem Kaliumsulfat auf 95°C ab. Die Maische wird mit Direktdampf auf 110°C erhitzt und durch Granulation getrocknet. Auf das ca. 100°C heiße Granulat wird nun eine Mischung nichtionogener wässriger Dispersionen von 0.01 g Pigment Red 57:1 (30 %-ig) und 0,01 g Pigment Blue 15:3 (40 %-ig) aufgesprüht und mit Heißluft getrocknet. Man erhält 100 g eines violett gefärbten granulierten Mehrnährstoffdüngers der Formel: 15 % N, 5 % P₂O₅ und 20 % K₂O.

### Beispiel 4:

Zu 9,5 g Rohphosphat mit einem P₂O₅-Gehalt von 33 % gibt man unter Rühren eine Mischung aus 38.0 g Salpetersäure (60 %) und 3,8 g Phosphorsäure (75 %), hält die Suspension 1 h bei 65°C und fügt dann noch 0,8 g Schwefelsäure (75 %) hinzu. Nach weiteren 15 Min. bei 60°C bringt man das Gemisch mit insgesamt 7.8 g gasförmigem Ammoniak langsam auf einen pH-Wert von 5,6. Dabei erwärmt sich die Mischung auf 110°C. Man fügt bei dieser Temperatur feinvermahlenes Ammoniumsulfat (6.5 g), Kieserit (7,2 g) sowie Kaliumsulfat (32,7 g) und danach ca. 5 ml Wasser hinzu, bis eine homogene, leicht fließfähige Suspension entstanden ist. Die Temperatur wird mit Direktdampf auf ca. 100 °C eingestellt und die Maische getrocknet. Das noch heiße Düngergranulat wird mit einer Mischung nichtionogener wässriger Dispersionen aus 0,005 g Pigment Red 57:1 (35 %-ig) und 0,02 g Pigment Blue 15:1 (45 %-ig) besprüht und mit Heißluft getrocknet. Es resultieren 98 g eines rotstichig blau gefärbten Mehrnährstoffdünger-Granulats der Formel: 12 % N, 12 % P₂O₅, 17 % K₂O und 2 % MgO.

Weitere Beispiele für die Düngereinfärbung sind in der folgenden Tabelle 1 wiedergegeben. Darin sind die Düngemittel mit ihrer Kurzformel (% N, % P₂O₅, % K₂O, % MgO) charakterisiert.

**Tabelle 1**

| | **ROTPIGMENT** | | | | **BLAUPIGMENT** | | | **ANWENDUNG/ERGEBNIS** | | |
|---|---|---|---|---|---|---|---|---|---|---|
| **Beisp. Nr.** | **Amin** | **Verlackungs metall; Pig.- Red** | **Dispersion** | **kg/t Dünger** | **Pigm. Blue** | **Dispersion** | **kg/t Dünger** | **Dünger** | **Färbeart** | **Farbton** |
| 5 | C-Amin | Ca; 52:1 | anion., Plv., 35%-ig | 0,25 | 15:2 | anion., Plv., 40%-ig | 0,20 | 20+5+10+4 | Durchfarbung | Violett |
| 6 | Tobias Säure | Ca; 63:1 | nichtion., flüss., 30%-ig | 0,14 | 15:1 | nichtion., flüss., 45%-ig | 0,10 | 16+48+0+0 | Oberflächenfärbung | Violett |
| 7 | 2B-Säure | Ba:48:1 | nichtion., flüss., 30%-ig | 0,10 | 15:4 | nichtion., flüss., 35%-ig | 0,15 | 15+5+20+2 | Oberflächenfärbung | Violett |
| 8 | 4B-Säure | Ca;57:1 | kation., Plv. 30%-ig | 0,35 | - | - | - | 11+52+0+0 | Durchfärbung | Rot |
| 9 | entfällt | | | | - | - | - | 12+10+20+3 | Durchfarbung | Gelbstichiges Rot |
| 10 | 2B-Säure | Mn; 48:4 | nichtion., flüss., 35%-ig | 0,15 | 15:6 | nichtion., flüss., 25%-ig | 0,12 | 15+5+20+5 | Oberflächenfärbung | Violett |
| 11 | 4B-Säure | Ca; 57:1 | nichtion., flüss., 30%-ig | 0,10 | 15:1 | nichtion., flüss., 45%-ig | 0,10 | 12+10+18+3 | Oberflächenfärbung | Violett |
| 12 | 4B-Säure | Ca;57:1 | anion., Plv., 30%-ig | 0.05 | 15.3 | anion., Plv., 35%-ig | 0,45 | 15+5+15+6 | Durchfärbung | Rotstichiges Blau |
| 13 | 4B-Säure | Ca; 57:1 | nichtion., flüss., 35%-lg | 0,20 | 16 | nichtion., flüss., 40%-ig | 0,05 | 0+0+0+28 | Oberflächenfärbung | Blaustichiges Rot |
| 14 | entfällt | | | | - | - | - | 18+8+12+2 | Oberflächenfärbung | Blaustichiges Rot |

## Patentansprüche

1. Verwendung von verlackten Azopigmenten auf Basis von Anilin- und/oder Naphthylamin-Sulfonsäuren und BON-Säure und einem Verlackungsmetall, ausgewählt aus den Elementen Calcium, Barium oder Mangan, vom Typ Pigment Red 48, 52, 57, 58, 63 und 200, oder in Mischung mit Pigment Blue 15 oder 16 zur Einfärbung von mineralischen Düngemitteln.

2. Verwendung nach Anspruch 1, **dadurch gekennzeichnet, dass** man als Verlackungsmetall insbesondere Calcium einsetzt.

3. Verwendung von verlackten Azopigmenten nach Anspruch 1 und 2, insbesondere zur Einfärbung von nitrathaltigen Mehrnährstoffdüngemitteln.

4. Verfahren zur Einfärbung von mineralischen Düngemitteln, **dadurch gekennzeichnet, dass** verlackte Azopigmente auf Basis von Anilin- und /oder Naphthylamin-Sulfonsäuren und BON-Säure und einem Verlackungsmetall, ausgewählt aus den Elementen Calcium, Barium oder Mangan, vom Typ Pigment Red 48, 52, 57, 58, 63 und 200, oder in Mischung mit Pigment Blue 15 oder 16 entweder durch Zugabe in der Düngemittel-Naßphase oder auf die getrockneten Düngemittelkömer appliziert werden.

5. Verfahren zur Einfärbung von mineralischen Düngemitteln nach Anspruch 4, **dadurch gekennzeichnet, dass** insbesondere mineralische nitrathaltige Mehrnährstoff Düngemittel eingesetzt werden.

## Claims

1. Use of laked azo pigments based on aniline and/or naphthylamine sulphonic acids and BON acid and a laking metal selected from the elements calcium, barium or manganese, of the type pigment red 48, 52, 57, 58, 63 and 200, or mixed with pigment blue 15 or 16 for colouring mineral fertilisers.

2. Use according to claim 1 **characterised in that** in particular calcium is used as the laking metal.

3. Use of laked azo pigments according to claim 1 or claim 2 in particular for colouring nitrate-bearing multi-nutrient fertilisers.

4. A method of colouring mineral fertilisers **characterised in that** laked azo pigments based on aniline and/or naphthylamine sulphonic acids and BON acid and a laking metal selected from the elements calcium, barium or manganese, of the type pigment red 48, 52, 57, 58, 63 and 200, or mixed with pigment blue 15 or 16 are applied either by addition in the fertiliser wet phase or to the dried fertiliser granules.

5. A method of colouring mineral fertilisers according to claim 4 **characterised in that** in particular mineral nitrate-bearing multi-nutrient fertilisers are used.

## Revendications

1. Utilisation de pigments azoïques vernissés à base d'acide anilinosulfonique/ou d'acide naphtylaminosulfonique et d'acide BON et d'un métal de vernissage choisi parmi les éléments de clacium, barum ou manganèse, du type pigment rouge 48, 52, 57, 58, 63 et 200 ou en mélange avec du pigment bleu 15 ou 16 pour colorer des engrais minéraux.

2. Utilisation suivant la revendication 1, **caractérisée en ce que** l'on utilise comme métal de vernissage notamment du calcium.

3. Utilisation de pigment azoïque vernissé selon la revendication 1 et 2, notamment pour colorer des engrais nitratés à substances nutritives multiples.

4. Procédé de coloration d'engrais minéraux **caractérisé en ce que** l'on applique des pigments azoïques vernissés à base d'acide anilinosulfonique/ou d'acide naphtylaminosulfonique et d'acide BON et d'un métal de vernissage choisi parmi les éléments de clacium, barum ou manganèse, du type pigment rouge 48, 52, 57, 58, 63 et 200 ou en mélange avec du pigment bleu 15 ou 16, soit par addition à la phase humide d'engrais soit sur des grains d'engrais séchés.

5. Procédé de coloration d'engrais minéraux suivant la revendication 4, **caractérisé en ce que** l'on utilise notamment des engrais minéraux nitratés à substances nutritives multiples.
